# EUROPÄISCHE PATENTSCHRIFT

(11) **EP 2 178 195 B1**
(45) Veröffentlichungstag und Bekanntmachung des Hinweises auf die Patenterteilung: **23.04.2014**
(21) Anmeldenummer: 09170617.6
(22) Anmeldetag: 17.09.2009
(51) Int. Cl.: H02M 3/158

(54) **Spannungswandler und Spannungswandlersystem**
Voltage converter and voltage converter system
Convertisseur de tension et système de convertisseur de tension

(30) Priorität: 20.10.2008 DE 102008053609
(43) Veröffentlichungstag der Anmeldung: 21.04.2010
(73) Patentinhaber: Flextronics International Kft., Tab 8660 (HU)
(72) Erfinder: Kocur, Vit, 32300 Plzen (CZ); Tiritoglu, Okan, 70174 Stuttgart (DE)
(74) Vertreter: Rupprecht, Kay

(56) Entgegenhaltungen:
- CN-A- 101 212 173
- JP-A- 2007 282 381

## Beschreibung

Die Erfindung betrifft einen Spannungswandler umfassend einen Wandlereingang, eine Drossel, die zwischen dem Wandlereingang und einer Verzweigung liegt, mindestens einen zwischen der Verzweigung und Masse liegenden Speicherzweig, in welchem eine Kapazität angeordnet ist, ein Schalternetz zum getakteten Laden oder Entladen der Kapazität, und eine das Schalternetz steuernde Steuerung. Eine solcher Spannungswandler ist durch die CN 101212173 bekannt geworden.

Ferner betrifft die Erfindung ein Spannungswandlersystem, welches einen vorstehenden Spannungswandler umfasst.

Derartige Spannungswandler sind aus dem Stand der Technik bekannt. Diese werden als sogenannte Buck-Boost-Wandler bezeichnet.

Bei diesen Buck-Boost-Wandlern besteht das Problem, dass in einer Schaltphase ein Aufladen der Kapazität erfolgt, in der anderen Schaltphase jedoch lediglich ein Kurzschluss zwischen der Drossel und Masse hergestellt wird. Damit erfolgt stets ein Schalten sehr großer Spannungsdifferenzen und es treten sehr stark schwankende Ströme auf.

Der Erfindung liegt daher die Aufgabe zugrunde, einen Spannungswandler mit den eingangs beschriebenen Merkmalen derart zu verbessern, dass dieser effizienter und mit weniger Störpotential arbeitet.

Diese Aufgabe wird bei einem Spannungswandler der eingangs beschriebenen Art erfindungsgemäß dadurch gelöst, dass zwischen der Verzweigung und Masse ein Basisspeicherzweig angeordnet ist, welcher eine Basiskapazität umfasst, dass zwischen der Verzweigung und Masse ein erster Ergänzungsspeicherzweig angeordnet ist, welcher eine erste Ergänzungskapazität aufweist und dass die Steuerung das erste Schalternetz so steuert, dass in einer ersten Schalphase die Basiskapazität und die erste Ergänzungskapazität parallel geschaltet zwischen der Verzweigung und Masse liegen und in einer zweiten Schaltphase die Basiskapazität und die erste Ergänzungskapazität in Reihe geschaltet zwischen der Verzweigung und Masse liegen.

Der Vorteil der erfindungsgemäßen Lösung - auch K-Wandler genannt - ist darin zu sehen, dass damit die Möglichkeit besteht, in beiden Schaltphasen mit beiden vorhandenen Kapazitäten zu arbeiten, das heißt in beiden Schaltphasen beide Kapazitäten zu laden oder zu entladen, so dass keine Schaltphase existiert, in welcher - wie beim bekannten Buck-Boost-Wandler - ein Kurzschluss zwischen der Drossel und Masse vorliegt.

Hinsichtlich der Ausbildung des Schalternetzes wurden bislang keine näheren Angaben gemacht. So sieht eine vorteilhafte Lösung vor, dass das erste Schalternetz einen zwischen der Verzweigung und der Basiskapazität liegenden ersten Schalter umfasst.

Ferner ist vorzugsweise vorgesehen, dass das erste Schalternetz einen zwischen der ersten Ergänzungskapazität und Masse liegenden zweiten Schalter umfasst.

Schließlich ist vorzugsweise vorgesehen, dass das erste Schalternetz einen dritten Schalter umfasst, welcher zwischen einem zwischen dem ersten Schalter und der Basiskapazität liegenden Mittelabgriff und einem zwischen der ersten Ergänzungskapazität und dem zweiten Schalter liegenden Mittelabgriff angeordnet ist.

Besonders vorteilhaft ist es, wenn die Steuerung das erste Schalternetz so schaltet, dass diese in der ersten Schaltphase den ersten Schalter und den zweiten Schalter des ersten Schalternetzes schließt und den dritten Schalter des ersten Schalternetzes öffnet und dass die Steuerung in der zweiten Schaltphase den ersten Schalter und den zweiten Schalter des ersten Schalternetzes öffnet und den dritten Schalter des ersten Schalternetzes schließt.

Damit kann in einfacher Weise sichergestellt werden, dass lediglich zwei Zustände vorliegen, nämlich einmal ein Zustand, in welchem beide Kapazitäten parallel zwischen der Verzweigung und Masse liegen und ein Zustand, in welchem die beiden Kapazitäten seriell, das heißt in Reihe geschaltet zwischen der Verzweigung und Masse liegen.

Durch das in Reihe schalten der Basiskapazität mit der ersten Ergänzungskapazität besteht die Möglichkeit, in der zweiten Schaltphase, die Spannung, die zwischen der Verzweigung und Masse liegt zu verdoppeln.

Der erfindungsgemäße Spannungswandler lässt sich jedoch in einfacher Weise so erweitern, dass noch höhere Spannungen erreichbar sind.

Eine vorteilhafte Lösung sieht vor, dass zwischen der Verzweigung und Masse ein zweiter Ergänzungsspeicherzweig angeordnet ist, welcher eine zweite Ergänzungskapazität umfasst und dass ein zweites Schalternetz vorgesehen ist, welches in der ersten Schaltphase die zweite Ergänzungskapazität parallel zur Basiskapazität und zur ersten Ergänzungskapazität zwischen die Verzweigung und Masse schaltet und in der zweiten Schaltphase zusammen mit dem ersten Schalternetz die Basiskapazität, die erste Ergänzungskapazität und die zweite Ergänzungskapazität in Reihe zwischen die Verzweigung und Masse schaltet.

Diese Lösung erlaubt es somit, in der zweiten Schaltphase eine dreimal so hohe Spannung zwischen der Verzweigung und Masse zu erreichen als in der ersten Schaltphase.

Die erfindungsgemäße Lösung kann jedoch in beliebiger Weise noch durch weitere Ergänzungsspeicherzweige mit weiteren Schalternetzes ergänzt werden, wobei stets entweder alle Kapazitäten parallel geschaltet sind oder alle Kapazitäten seriell, das heißt in Reihe zwischen der Verzweigung und Masse liegen.

Insbesondere ist dabei vorgesehen, dass die Steuerung in der ersten Schaltphase den ersten Schalter und den zweiten Schalter des zweiten Schalternetzes schließt und den dritten Schalter des zweiten Schalternetzes öffnet und in der zweiten Schaltphase den ersten Schalter und den zweiten Schalter des zweiten Schalternetzes öffnet und den dritten Schalter des zweiten Schalternetzes schließt.

Darüber hinaus betrifft die Erfindung ein Spannungswandlersystem, bei welchem erfindungsgemäß mindestens ein Spannungswandler mit einem oder mehreren der vorstehend genannten Merkmale vorgesehen ist.

Insbesondere ist dabei vorgesehen, dass das Spannungswandlersystem zwei Spannungswandler mit einem oder mehreren der vorstehend genannten Merkmale umfasst.

Ein derartiges Spannungswandlersystem eröffnet die Möglichkeit, einen oder mehrere der vorstehend genannten Spannungswandler im Zusammenhang mit zusätzlichen Funktionen einzusetzen.

So sieht eine zweckmäßige Lösung vor, dass dem Spannungswandler in der zweiten Schaltphase ein Zusatzspeicherzweig zuschaltbar ist.

Dabei ist insbesondere vorgesehen, dass in der zweiten Schaltphase der Zusatzspeicherzweig zwischen der Verzweigung und Masse liegt.

Prinzipiell könnte der Zusatzspeicherzweig in unterschiedlichen Phasen zuschaltbar sein. Eine vorteilhafte Lösung sieht vor, dass der Zusatzspeicherzweig nur in der zweiten Schaltphase zuschaltbar ist.

Eine andere Ausführungsform eines erfindungsgemäßen Spannungswandlersystems sieht vor, dass zwei Spannungswandler mit Phasenverschiebung arbeiten, so dass die Spannungswandler in der zumindest zeitweise in der jeweils anderen Schaltphase arbeiten, das heißt, dass zumindest zeitweise ein Spannungswandler in der ersten Schaltphase arbeitet, während der zweite Spannungswandler in der zweiten Schaltphase arbeitet und umgekehrt.

Diese Lösung ermöglicht es, den den Spannungswandlern zuzuführenden oder von diesen abzugebenden Strom möglichst gleich groß zu halten.

Insbesondere ist bei einer derartigen Lösung denkbar, dass die Spannungswandler durch eine gemeinsame Drossel gespeist sind.

Besonders günstig ist es, wenn bei einem derartigen Spannungswandlersystem ein Wandlerausgang vorgesehen ist, der wechselweise einem der Spannungswandler zuschaltbar ist.

Insbesondere ist es dabei günstig, wenn der Wandlerausgang dem Spannungswandler zuschaltbar ist, der in der zweiten Schaltphase ist, da damit am Wandlerausgang die erhöhte Spannung zur Verfügung steht.

Eine weitere Ausführungsform eines erfindungsgemäßen Wandlersystems sieht vor, dass die Steuerung zur kurzzeitigen Einspeisung großer Ströme in das Versorgungsnetz nicht mehr getaktet zwischen der ersten und der zweiten Schaltphase schaltet, sondern für die Zeitdauer der Einspeisung ständig eine der Schaltphasen, beispielsweise die erste Schaltphase, aufrecht erhält und damit in der Lage ist, über die Drossel einen hohen Strom ungetaktet in das Versorgungsnetz einzuspeisen.

Eine weitere vorteilhafte Ausführungsform eines erfindungsgemäßen Wandlersystems sieht einen Wandlerausgang vor, welcher ständig, das heißt ungetaktet, in der ersten Schaltphase oder zweiten Schaltphase mit der Verzweigung verbindbar ist.

Diese Lösung hat den Vorteil, dass damit die Möglichkeit besteht, bei bestimmtem starkem Stromverbrauch einer Last über den Wandlerausgang die Kapazitäten zu entladen, und zwar dann, wenn diese ständig parallel oder seriell geschaltet sind, so dass damit die Kapazitäten als Energiespeicher zur Verfügung stehen, der in der Lage ist, kurzzeitig einen hohen Strom zu liefern.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine Darstellung eines ersten Ausführungsbeispiels eines erfindungsgemäßen Spannungswandlers;
- Fig. 2: eine schematische Darstellung einer Funktionsweise des ersten Ausführungsbeispiels des erfindungsgemäßen Spannungswandlers;
- Fig. 3: eine Darstellung ähnlich Fig. 1 eines zweiten Ausführungsbeispiels eines erfindungsgemäßen Spannungswandlers;
- Fig. 4: eine Darstellung eines ersten Ausführungsbeispiels eines erfindungsgemäßen Spannungswandlersystems;
- Fig. 5: eine Darstellung eines zweiten Ausführungsbeispiels eines erfindungsgemäßen Spannungswandlersystems und
- Fig. 6: eine Darstellung eines dritten Ausführungsbeispiels eines erfindungsgemäßen Spannungswandlersystems.

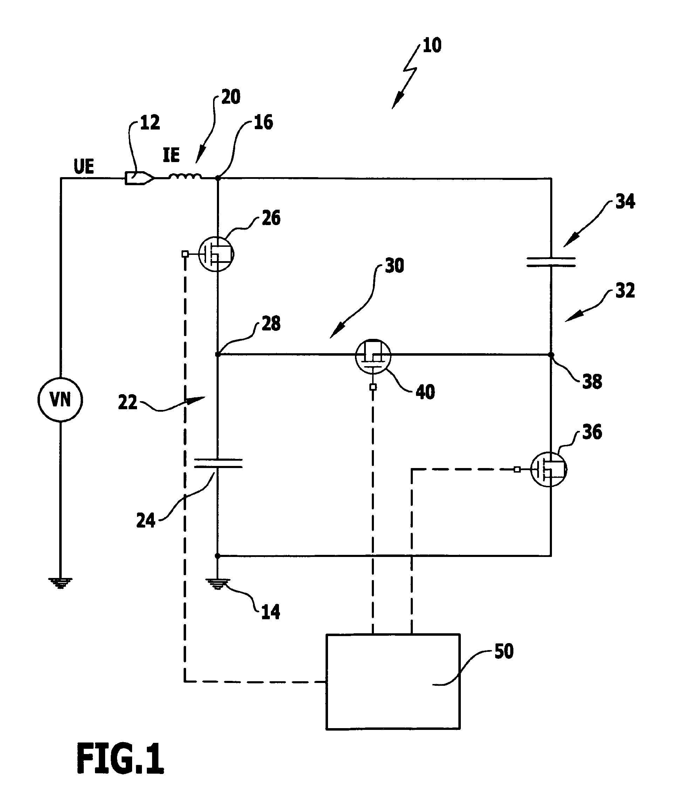

Ein Ausführungsbeispiel eines erfindungsgemäßen Spannungswandlers 10 - auch K-Wandler genannt -, dargestellt in Fig. 1, umfasst einen Wandlereingang 12, an welchem gegenüber Masse 14 eine Eingangsspannung UE eines Versorgungsnetzes VN anliegt.

Zwischen dem Wandlereingang 12 und einer Verzweigung 16 liegt eine als Ganzes mit 20 bezeichnete Drossel, durch welche der gesamte, in den erfindungsgemäßen Spannungswandler 10 hineinfließende oder aus diesem herausfließende Strom IE hindurchfließt.

Ausgehend von der Verzweigung 16 führt ein Basisspeicherzweig 22 zur Masse 14, wobei in dem Basisspeicherzweig 22 eine Basiskapazität 24 angeordnet ist.

Ein Strom durch den Basisspeicherzweig 22 lässt sich dadurch unterbrechen, dass ein erster Schalter 26 eines ersten Schalternetzes 30 zwischen der Verzweigung 16 und der Basiskapazität 24 angeordnet ist, wobei zwischen dem ersten Schalter 26 und der Basiskapazität 24 ein erster Mittelabgriff 28 liegt.

Von der Verzweigung 16 führt außerdem ein erster Ergänzungsspeicherzweig 32 zur Masse, wobei in dem ersten Ergänzungsspeicherzweig eine erste Ergänzungskapazität 34 angeordnet ist Zwischen der ersten Ergänzungskapazität 34 und der Masse 14 ist ein zweiter Schalter 36 des Schalternetzes 30 vorgesehen, wobei zwischen der ersten Ergänzungskapazität 34 und dem zweiten Schalter 36 ein zweiter Mittelabgriff 38 liegt.

Ferner ist noch ein dritter Schalter 40 des ersten Schalternetzes 30 vorgesehen, welcher zwischen dem ersten Mittelabgriff 28 und dem zweiten Mittelabgriff 38 liegt.

Der erste Schalter 26, der zweite Schalter 36 und der dritte Schalter 40 des ersten Schalternetzes 30 sind durch eine als Ganzes mit 50 bezeichnete Steuerung in zwei Schaltphasen SP1 und SP2 steuerbar, und zwar so, dass entweder in der ersten Schaltphase SP1 der erste Schalter 26 und der zweite Schalter 36 geschlossen sind und der dritte Schalter 40 geöffnet ist oder in der zweiten Schaltphase SP2 der erste Schalter 26 und der zweite Schalter 36 geöffnet sind und der dritte Schalter 40 geschlossen ist.

Die Basiskapazität 24 und die erste Ergänzungskapazität 34 sind vorzugsweise Kondensatormodule aus Hochleistungskondensatorzellen, und die Kondensatormodule weisen bei einer vorgesehenen Maximalspannung von ungefähr 13 Volt eine Kapazität von mindestens 10 Farad, noch besser mindestens 20 Farad, vorzugsweise mindestens 30 Farad und in einem sehr günstigen Fall mindestens 50 Farad auf.

Derartige Kondensatorzellen sind beispielsweise als elektrochemische Doppelschichtkondensatoren aufgebaut, wie sie von der Firma Maxwell Technologies vertrieben werden. Es sind jedoch auch andere elektrische Energiespeicher denkbar.

In der ersten Schaltphase liegen die Basiskapazität 24 im Basisspeicherzweig 22 und die erste Ergänzungskapazität 34 im ersten Ergänzungsspeicherzweig 32 parallel zwischen der Verzweigung 16 und der Masse 14, so dass sich der Strom IE, welcher durch die Drossel 20 fließt, auf die beiden Speicherzweige 22 und 32 aufteilt und jeweils auf die Basiskapazität 24 und die erste Ergänzungskapazität 34 einwirkt, wobei in diesem Fall sowohl über der Basiskapazität 24 als auch über der ersten Ergänzungskapazität 34 die Spannung UE anliegt.

In der zweiten Schaltphase erfolgt dann seitens der Steuerung 50 ein Öffnen des ersten Schalters 26 und des zweiten Schalters 36 und ein Schließen des dritten Schalters 40, so dass in diesem Fall die Basiskapazität 24 und die erste Ergänzungskapazität 34 über den geschlossenen dritten Schalter 40 in Reihe geschaltet sind und somit beide Kapazitäten 24, 34 in Reihe geschaltet zwischen der Verzweigung 16 und der Masse 14 liegen.

In der zweiten Schaltphase liegt an der Verzweigung 16 die Summe der Spannungen an der Basiskapazität 24 und an der ersten Ergänzungskapazität 34 an.

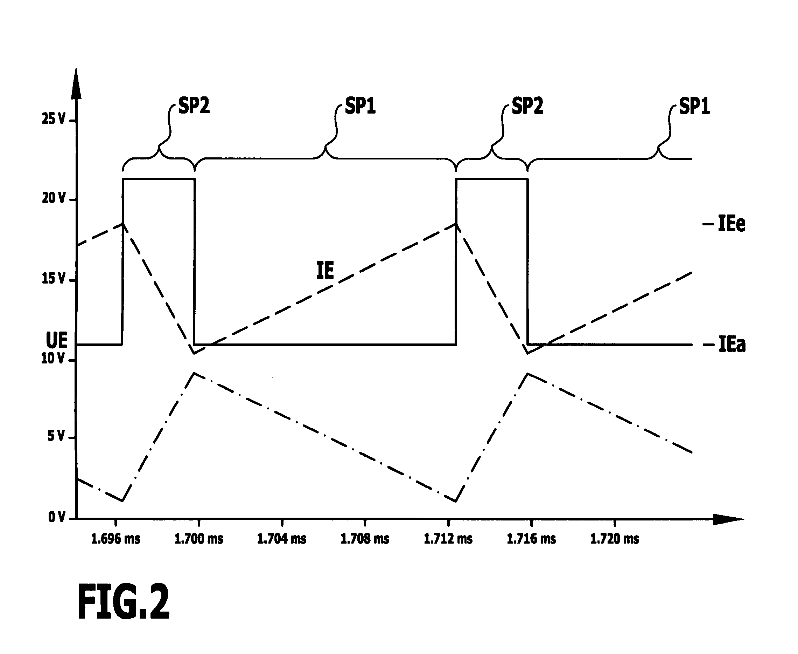

Die sich in den zwei Schaltphasen SP1, SP2 ergebenden Spannungen und Ströme sind in Fig. 2 dargestellt.

Fig. 2 zeigt, dass während der ersten Schaltphase SP1, in der der erste Schalter 26 und der zweite Schalter 36 geschlossen und der dritte Schalter 40 geöffnet ist, die Spannung an der Verzweigung 16 ungefähr gleich der Spannung UE ist, während in der zweiten Schaltphase SP2, während welcher der erste Schalter 26 und der zweite Schalter 36 geöffnet sind und der dritte Schalter 40 geschlossen ist, die an der Verzweigung 16 liegende Spannung ungefähr 2 UE beträgt.

Die Steuerung 50 steuert jedoch nicht nur die Schalter 26, 36 und 40 des ersten Schaltnetzes 30 zwischen der ersten Schaltphase SP1 und der zweiten Schaltphase SP2 sondern auch noch gleichzeitig die Dauer der Schaltphasen SP1 und SP2. Über die Dauern der Schaltphasen SP1 und SP2 relativ zueinander lässt sich dabei einstellen, ob dem Versorgungsnetz VN über die Drossel 20 Energie entnommen wird und in den Kapazitäten 24 und 34 gespeichert wird oder ob dem Versorgungsnetz VN über die Drossel 20 die elektrische Energie aus den Speicherkapazitäten 24 und 34 zugeführt wird.

Beim Speichern von elektrischer Energie in den Kapazitäten 24 und 34 führt dies dazu, dass während der ersten Schaltphase SP1 der Strom IE durch die Drossel 20 von einem Ausgangswert IEa bis zu einem Endwert IEe ansteigt, so dass in Bezug auf die Drossel 20 eine Speicherlaufphase vorliegt. Während der zweiten Schaltphase SP2 liegt, bezogen auf die Drossel 20, eine Freilaufphase vor und der Strom IE durch die Drossel 20 fällt von dem Endwert IEe wieder auf den Ausgangswert IEa ab, wobei auf die zweite Schaltphase SP2 erneut eine erste Schaltphase SP1 folgt, so dass der Strom IE durch die Drossel 20 wieder ansteigt.

Dabei erfolgt beim Speichern von elektrischer Energie in den Kapazitäten 24 und 34 sowohl während der Speicherlaufphase der Drossel 20 als auch während der Freilaufphase der Drossel 20 stets ein Laden der beiden Kapazitäten 24 und 34, was dazu führt, dass die Schwankungen des Stroms IE sowohl während der ersten Schaltphase als auch während der zweiten Schaltphase wesentlich geringer sind als die Stromschwankungen in einem Buck-Boost-Wandler. Desgleichen erfolgt auch beim Abgeben von elektrischer Energie aus den Kapazitäten 24 und 34 des Spannungswandlers 10, wie in Fig. 2 gestrichelt dargestellt, während der zweiten Schaltphase SP2 ein Ansteigen eines Stroms -IE durch die Drossel 20, wobei dies, bezogen auf die Drossel 20 die Speicherlaufphase darstellt, während in der ersten Schaltphase SP1 bezogen auf die Drossel 20 eine Freilaufphase vorliegt, in welcher der Strom -IE durch die Drossel 20 wiederum auf einen Ausgangswert vor Beginn der zweiten Schaltphase SP2 abfällt.

Auch im Falle einer Abgabe von elektrischer Energie aus den Kapazitäten 24 und 34 fließt sowohl in der zweiten Schaltphase SP2 als auch in der ersten Schaltphase SP1 stets ein die Kapazitäten 24 und 34 entladender Strom durch diese, wobei auch bei diesem Ausführungsbeispiel die Stromschwankungen in den Schaltphasen SP2 und SP1 wesentlich kleiner sind als bei einem Buck-Boost-Wandler.

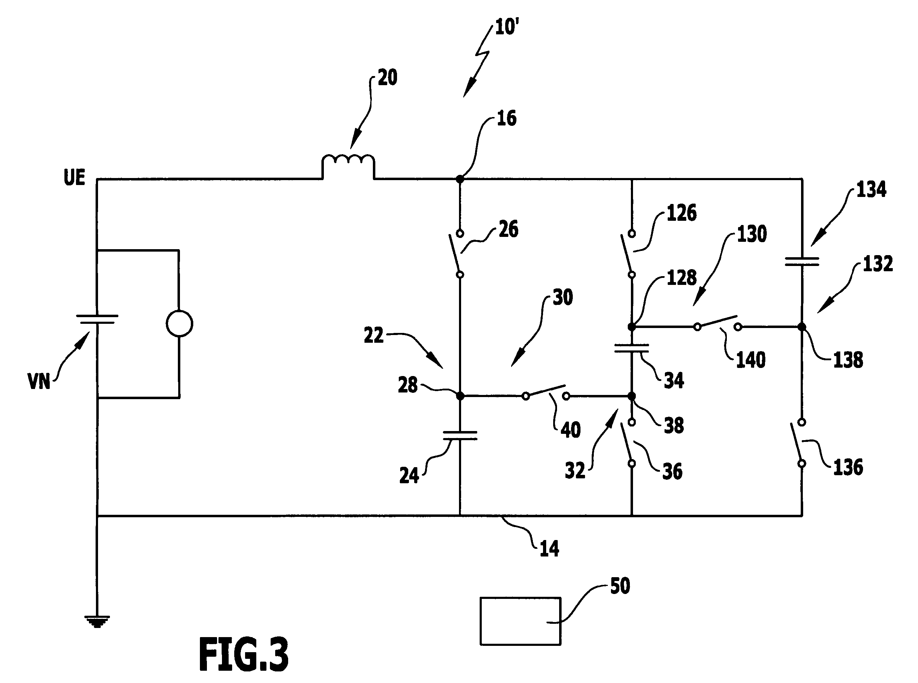

Bei einem zweiten Ausführungsbeispiel eines erfindungsgemäßen Spannungswandlers 10', dargestellt in Fig. 3 sind diejenigen Elemente, die mit denen des ersten Ausführungsbeispiels identisch sind, mit denselben Bezugszeichen versehen, so dass vollinhaltlich auf die Ausführungen zu diesen Bezug genommen wird.

Im Gegensatz zum ersten Ausführungsbeispiel des erfindungsgemäßen Spannungswandlers 10 ist beim zweiten Ausführungsbeispiel des erfindungsgemäßen Spannungswandlers 10' ein zweiter Ergänzungsspeicherzweig 132 zwischen der Verzweigung 16 und der Masse 14 vorgesehen, der eine zweite Ergänzungskapazität 134 umfasst.

Ferner ist ein zweites Schalternetz 130 vorgesehen, dessen erster Schalter 126 zwischen der Verzweigung 16 und der ersten Ergänzungskapazität 34 liegt, wobei ein Mittelabgriff 128 zwischen dem ersten Schalter 126 und der ersten Ergänzungskapazität 134 angeordnet ist.

Ferner liegt zwischen der zweiten Ergänzungskapazität 134 und Masse 14 ein zweiter Schalter 140 des zweiten Schalternetzes 130 zwischen dem Mittelabgriff 128 und dem Mittelabgriff 138 liegt. Die Ansteuerung der Schalter 126, 136 und 140 des zweiten Schalternetzes 130 erfolgt ebenfalls über die Steuerung 50 und zwar synchron zu den Schaltern des ersten Schalternetzes 30, das heißt, dass zu den Zeiten, zu denen der erste Schalter 26 und der zweite Schalter 36 geschlossen und der dritte Schalter 40 des ersten Schalternetzes 30 geöffnet ist, auch ein Schließen des ersten Schalters 126 und des zweiten Schalters 136 sowie ein Öffnen des dritten Schalters 140 des zweiten Schalternetzes 130 erfolgt, während umgekehrt zu den Zeiten, zu denen der erste Schalter 26 und der zweite Schalter 36 geöffnet und der dritte Schalter 40 des ersten Schalternetzes 30 geschlossen ist, auch ein Öffnen des ersten Schalters 126 und des zweiten Schalters 136 sowie ein Schließen des dritten Schalters 140 des zweiten Schalternetzes 130 erfolgt.

Daraus folgt, dass die erste Schaltphase SP1 des ersten Schalternetzes 30 identisch ist mit der ersten Schaltphase SP1 des zweiten Schalternetzes 130 und die zweite Schaltphase SP2 des ersten Schalternetzes 30 identisch ist mit der zweiten Schaltphase SP2 des zweiten Schalternetzes 130.

Dies führt dazu, dass in der ersten Schaltphase die Basiskapazität 24 sowie die erste Ergänzungskapazität 34 und die zweite Ergänzungskapazität 134 zwischen der Verzweigung 16 und der Masse 14 parallel geschaltet sind und somit durch den durch die Drossel 20 fließenden Strom IE aufgeladen werden, während in der zweiten Schaltphase SP2 die Basiskapazität 24, die erste Ergänzungskapazität 34 sowie die zweite Ergänzungskapazität 134 miteinander in Reihe geschaltet zwischen der Verzweigung 16 und Masse 14 liegen, so dass an der Verzweigung 16 dann die Spannung 3UE anliegt.

Auch das Speichern von elektrischer Energie in den Kapazitäten 24, 34 und 134 oder die Abgabe von elektrischer Energie aus den Kapazitäten 24, 34 und 134 in das Versorgungsnetz VN erfolgt in gleicher Weise wie im Zusammenhang mit dem ersten Ausführungsbeispiel beschrieben, so dass diesbezüglich auf die Ausführungen im ersten Ausführungsbeispiel vollinhaltlich Bezug genommen werden kann, mit dem einzigen Unterschied, dass in der zweiten Schaltphase SP2 an der Verzweigung 16 nicht die Spannung 2UE wie beim ersten Ausführungsbeispiel anliegt, sondern die Spannung 3UE.

Das erste oder zweite Ausführungsbeispiel des erfindungsgemäßen Spannungswandlers 10 oder 10' kann in unterschiedlichster Weise zu einem Spannungssystem kombiniert werden.

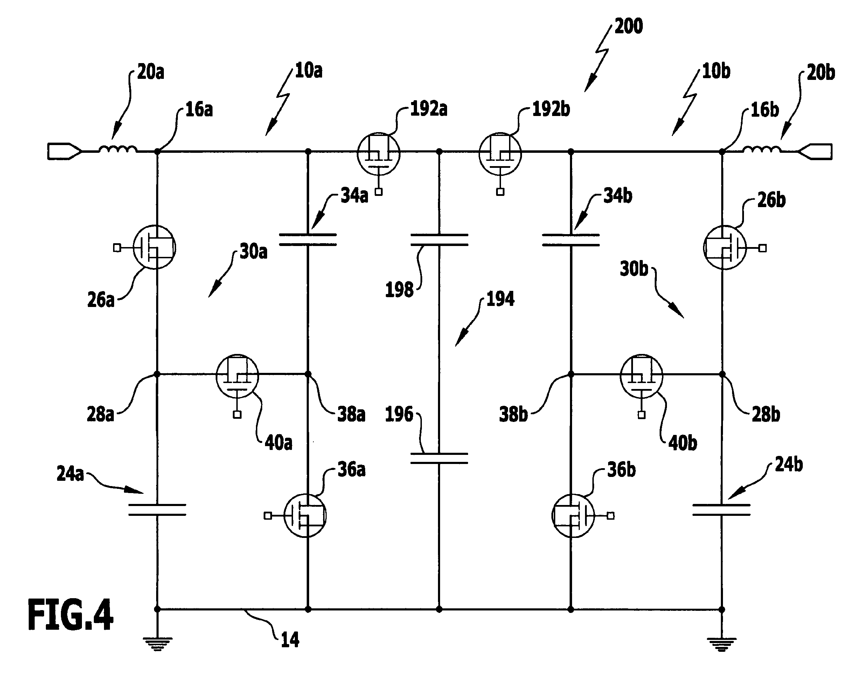

Bei einem ersten Ausführungsbeispiel eines erfindungsgemäßen Spannungswandlersystems 200, dargestellt in Fig. 4 sind zwei Spannungswandler 10a, 10b, die identisch aufgebaut sind wie das erste Ausführungsbeispiel des erfindungsgemäßen Spannungswandlers, dargestellt in Fig. 1 und 2, eingesetzt, wobei die Verzweigungen 16a jeweils über einen Schalter 192a bzw. 192b mit einem gemeinsamen Speicherzweig 194 verbindbar sind, und zwar stets dann, wenn die jeweilige Basiskapazität 24a bzw. 24b und die jeweilige erste Ergänzungskapazität 34a bzw. 34b zwischen der jeweiligen Verzweigung 16a bzw. 16b und der Masse 14 in Reihe geschaltet sind und somit die zweite Schaltphase SP2 vorliegt, wobei in dieser zweiten Schaltphase SP2 jeweils noch ein Aufladen von Kapazitäten 196 und 198 des gemeinsamen Speicherzweigs 194 erfolgt, die vorzugsweise in gleicher Weise ausgebildet sind wie die Basiskapazitäten 24a bzw. 24b und die ersten Ergänzungsspeicherkapazitäten 34a und 34b, so dass bei jedem der Spannungswandler 10a, 10b in der zweiten Schaltphase SP2 noch der gemeinsame Zweig 194 mit den Kapazitäten 196 und 198 ergänzend zur Verfügung steht.

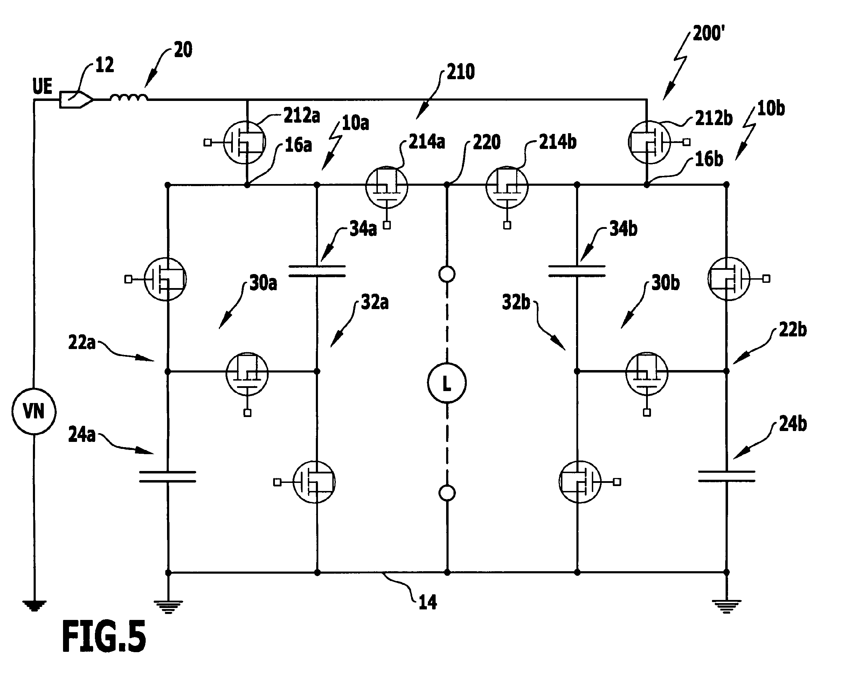

Wie beispielsweise in Fig. 5 dargestellt, umfasst ein zweites Ausführungsbeispiel eines erfindungsgemäßen Spannungswandlersystems 200' ebenfalls die mit dem Wandlereingang 12 verbundene Drossel 20, welche jedoch über Schalter 212a und 212b eines Umschaltnetzes 210 mit zwei Verzweigungen 16a und 16b verbindbar ist, wobei mit jeder der Verzweigungen 16a und 16b jeweils ein Basisspeicherzweig 22a bzw. 22b und jeweils ein erster Ergänzungsspeicherzweig 32a bzw. 32b verbunden ist, und, genau wie beim ersten Ausführungsbeispiel des erfindungsgemäßen Spannungswandlers, jeweils ein erstes Schalternetz 30a bzw. 30b zum Parallelschalten oder in Reiheschalten der Basiskapazitäten 24a bzw. 24b mit den jeweiligen ersten Ergänzungsspeicherkapazitäten 34a bzw. 34b vorgesehen ist.

Ferner sind zwischen den Verzweigungen 16a und 16b noch Schalter 214a und 214b des Umschaltnetzes 210 vorgesehen, mit welchen die Verzweigungen 16a bzw. 16b auf einen Wandlerausgang 220 schaltbar sind, wobei zwischen dem Wandlerausgang 220 und der Masse 14 eine Last L liegt.

Die Schalter 212a und 212b sowie 214a und 214b des Umschaltnetzes 210 sind dabei so schaltbar, dass entweder die Verzweigung 16a mit der Drossel 20 oder die Verzweigung 16b mit der Drossel 20 verbunden ist und die stets nicht mit der Drossel 20 verbundene Verzweigung 16a bzw. 16b mittels der Schalter 214b bzw. 214a mit dem Wandlerausgang 220 verbunden ist.

Ferner sind die ersten Schalternetze 30a bzw. 30b durch die Steuerung 50 so geschaltet, dass diese dann, wenn die Verzweigung 16a mit der Drossel 20 verbunden ist, die jeweilige Basiskapazität 24a bzw. 24b und die jeweilige erste Ergänzungskapazität 34a bzw. 34b parallel zueinander zwischen die Verzweigung 16a und die Masse 14 schalten und stets dann, wenn die Verzweigung 16b bzw. 16a mittels der Schalter 214b bzw. 214a mit dem Wandlerausgang 220 verbunden ist, die Basiskapazität 24a bzw. 24b und die erste Ergänzungskapazität 34a in Reihe zwischen die jeweilige Verzweigung 16b bzw. 16a und Masse 14 schalten.

Bei diesem Spannungswandlersystem fließt somit stets durch die Drossel 20 ein Strom, der bei geschlossenem Schalter 212a und geöffnetem Schalter 212b die parallel geschalteten Kapazitäten 24a und 34a auflädt, während in dieser Phase die Basiskapazität 24b und die erste Ergänzungskapazität 34b in Reihe zwischen der Verzweigung 16b und der Masse 14 liegend eingesetzt werden, wobei die Verzweigung 16b mit dem Wandlerausgang 220 verbunden ist, so dass am Wandlerausgang 220 stets die Spannung 2UE zur Verfügung steht.

Alternativ dazu werden bei geöffnetem Schalter 212a und geschlossenem Schalter 212b die parallel geschalteten Kapazitäten 24b und 34b aufgeladen, während die Basiskapazität 24a und die erste Ergänzungskapazität 34a in Reihe geschaltet eingesetzt werden, wobei die Verzweigung 16a mit dem Wandlerausgang 220 verbunden ist.

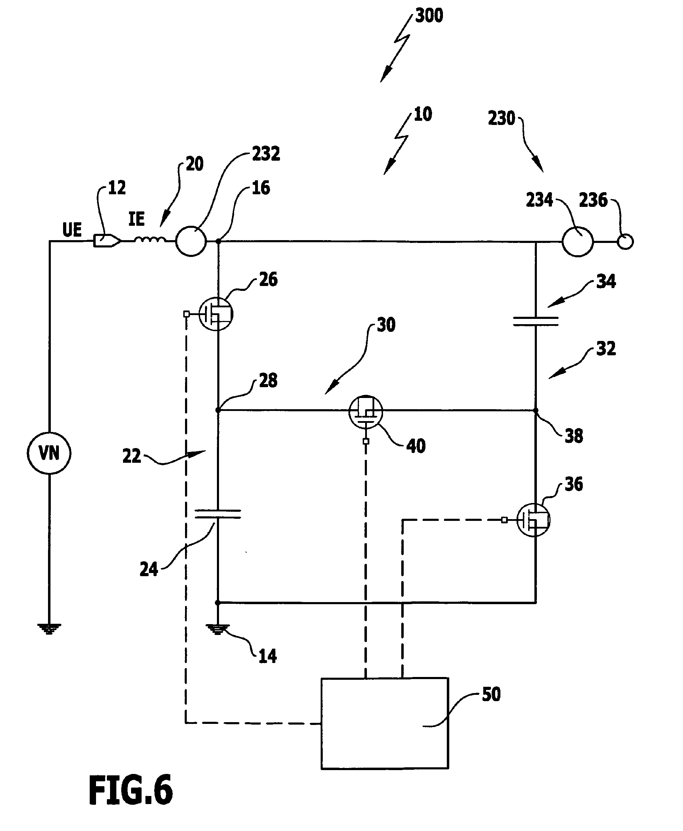

Bei einem dritten Ausführungsbeispiel eines erfindungsgemäßen Spannungswandlersystems 300, dargestellt in Fig. 6, findet das erste Ausführungsbeispiel das in Fig. 1 dargestellten Spannungswandlers Verwendung, allerdings ist zwischen der Drossel 20 und der Verzweigung 16 ein Schalter 232 eines Umschalternetzes 230 vorgesehen und zwischen der Verzweigung 16 und einem Wandlerausgang 236 ein zweiter Schalter 234 des Umschaltnetzes 230.

Mit diesen beiden Schaltern 232 und 234 lässt sich, wenn der Schalter 232 eingeschaltet und der Schalter 234 ausgeschaltet ist, der Spannungswandler in gleicher Weise betreiben, wie im Zusammenhang mit dem ersten Ausführungsbeispiel im Detail beschrieben.

Im Falle eines Absinkens der Spannung im Versorgungsnetz VN lässt sich dies kurzzeitig dadurch stützen, dass das erste Schalternetz 30 während eines Einspeisezeitraums ständig in der ersten Schaltphase gehalten wird und somit ein Strom zeitlich unmoduliert über die Drossel 20 in das Versorgungsnetz fließt.

Wird kurzzeitig ein hoher Strom oder ein hoher Unterstützungsstrom für eine Last, beispielsweise für einen Anlasser eines Verbrennungsmotors, benötigt, so lässt sich der Wandlerausgang 236 mit der Last durch Öffnen des Schalters 232 und gegebenenfalls Schließen des Schalters 234 ungetaktet mit Strom speisen, wobei während eines Einspeisezeitraums durch ständiges Ansteuern des ersten Schalternetzes 30 dergestalt, dass die erste Schaltphase SP1 vorliegt und die Basiskapazität 24 sowie die erste Ergänzungskapazität 34 parallel geschaltet zwischen der Verzweigung 16 und Masse liegen, kurzfristig elektrische Energie aus den parallel geschalteten Kapazitäten 24 und 34 über den Wandlerausgang 236 ohne eine zwischengeschaltete Drossel 20 entnehmbar ist.

Es ist aber auch möglich, die elektrische Energie während eines Einspeisezeitraums durch ständiges Ansteuern des Schalternetzes 30 in der zweiten Schaltphase bei einer Reihenschaltung der Basiskapazität 24 und der ersten Ergänzungskapazität 34 und somit mit doppelter Spannung ungetaktet zu entnehmen.

Danach wird der Schalter 234 wieder geschlossen und der Schalter 232 geöffnet, so dass dann der erste Spannungswandler in gleicher Weise arbeitet, wie beim ersten Ausführungsbeispiel beschrieben und als Energiespeicher dazu dient, über die Drossel 20 das Versorgungsnetz VN kurzzeitig zu unterstützen oder dem Versorgungsnetz VN wieder kurzzeitig oder über längere Zeiträume Energie zu entziehen und diese in den Kapazitäten 24 und 34 zu speichern.

## Patentansprüche

1. Spannungswandler umfassend einen Wandlereingang (12), eine Drossel (20), die zwischen dem Wandlereingang (12) und einer Verzweigung (16) liegt,
mindestens einen zwischen der Verzweigung (16) und Masse (14) liegenden Speicherzweig (22, 32, 132), in welchem eine Kapazität (24, 34, 134) angeordnet ist,
ein Schalternetz (30, 130) zum getakteten Laden oder Entladen der Kapazität,
und eine das Schalternetz (30, 130) steuernde Steuerung (50) **dadurch gekennzeichnet, dass** zwischen der Verzweigung (16) und Masse (14) ein Basisspeicherzweig (22) angeordnet ist, welcher eine Basiskapazität (24) umfasst, dass zwischen der Verzweigung (16) und Masse (14) ein erster Ergänzungsspeicherzweig (32) angeordnet ist, welcher eine erste Ergänzungskapazität (34) aufweist,
und dass die Steuerung (50) ein erstes Schalternetz (30) so steuert, dass in einer ersten Schaltphase (SP1) die Basiskapazität (24) und die erste Ergänzungskapazität (34) parallel geschaltet zwischen der Verzweigung (16) und Masse (14) liegen und in einer zweiten Schaltphase (SP2) die Basiskapazität (24) und die erste Ergänzungskapazität (34) in Reihe geschaltet zwischen der Verzweigung (16) und Masse (14) liegen.

2. Spannungswandler nach Anspruch 1, **dadurch gekennzeichnet, dass** das erste Schalternetz (30) einen zwischen der Verzweigung (16) und der Basiskapazität (24) liegenden ersten Schalter (26) umfasst.

3. Spannungswandler nach Anspruch 1 oder 2, **dadurch gekennzeichnet, dass** das erste Schalternetz (30) einen zwischen der ersten Ergänzungskapazität (34) und Masse (14) liegenden zweiten Schalter (36) umfasst.

4. Spannungswandler nach einem der voranstehenden Ansprüche, **dadurch gekennzeichnet, dass** das erste Schalternetz (30) einen dritten Schalter (40) umfasst, welcher zwischen einem zwischen dem ersten Schalter (26) und der Basiskapazität (24) liegenden Mittelabgriff (28) und einem zwischen der ersten Ergänzungskapazität (34) und dem zweiten Schalter (36) liegenden Mittelabgriff (38) angeordnet ist.

5. Spannungswandler nach einem der voranstehenden Ansprüche, **dadurch gekennzeichnet, dass** die Steuerung (50) in der ersten Schaltphase (SP1) den ersten Schalter (26) und den zweiten Schalter (36) des ersten Schalternetzes (30) schließt und den dritten Schalter (40) des ersten Schalternetzes (30) öffnet und dass die Steuerung (50) in der zweiten Schaltphase (SP2) den ersten Schalter (26) und den zweiten Schalter (36) des ersten Schalternetzes (30) öffnet und den dritten Schalter (40) des ersten Schalternetzes (30) schließt.

6. Spannungswandler nach einem der voranstehenden Ansprüche, **dadurch gekennzeichnet, dass** zwischen der Verzweigung (16) und Masse ein zweiter Ergänzungsspeicherzweig (134) angeordnet ist, welcher eine zweite Ergänzungskapazität (134) umfasst und dass ein zweites Schalternetz (130) vorgesehen ist, welches in der ersten Schaltphase (SP1) die zweite Ergänzungskapazität (134) parallel zur Basiskapazität (24) und zur ersten Ergänzungskapazität (134) zwischen die Verzweigung (16) und Masse (14) schaltet und in der zweiten Schaltphase (SP2) zusammen mit dem ersten Schalternetz (30) die Basiskapazität (24), die erste Ergänzungskapazität (34) und die zweite Ergänzungskapazität (134) in Reihe zwischen die Verzweigung (16) und Masse (14) schaltet.

7. Spannungswandler nach Anspruch 6, **dadurch gekennzeichnet, dass** die Steuerung (50) in der ersten Schaltphase (SP1) den ersten Schalter (126) und den zweiten Schalter (136) des zweiten Schalternetzes (130) schließt und den dritten Schalter (140) des zweiten Schalternetzes (130) öffnet und in der zweiten Schaltphase (SP2) den ersten Schalter (126) und den zweiten Schalter (136) des zweiten Schalternetzes (130) öffnet und den dritten Schalter (140) des zweiten Schalternetzes (130) schließt.

8. Spannungswandlersystem, **dadurch gekennzeichnet, dass** das Spannungswandlersystem (200, 200', 200) mindestens einen Spannungswandler (10, 10') oder beispielsweise zwei Spannungswandler (10, 10') gemäß einem der voranstehenden Ansprüche umfasst.

9. Spannungswandlersystem nach Anspruch 8, **dadurch gekennzeichnet, dass** dem Spannungswandler (10) in der zweiten Schaltphase (SP2) ein Zusatzspeicherzweig (194) zuschaltbar ist und dass beispielsweise in der zweiten Schaltphase (SP2) der Zusatzspeicherzweig (194) zwischen der Verzweigung (16) und Masse (14) liegt.

10. Spannungswandlersystem nach Anspruch 9, **dadurch gekennzeichnet, dass** der Zusatzspeicherzweig (194) nur in der zweiten Schaltphase (SP2) zuschaltbar ist.

11. Spannungswandlersystem nach einem der voranstehenden Ansprüche, **dadurch gekennzeichnet, dass** zwei Spannungswandler (10, 10') parallel jedoch in der jeweils anderen Schaltphase (SP1, SP2) arbeiten.

12. Spannungswandlersystem nach Anspruch 11, **dadurch gekennzeichnet, dass** die Spannungswandler (10, 10') durch eine gemeinsame Drossel (20) gespeist sind.

13. Spannungswandlersystem nach Anspruch 11 oder 12, **dadurch gekennzeichnet, dass** das Spannungswandlersystem einen Wandlerausgang (220) aufweist, der wechselweise einem der Spannungswandler (10) zuschaltbar ist und dass beispielsweise der Wandlerausgang (220) dem Spannungswandler (10, 10') zuschaltbar ist, der in der zweiten Schaltphase (SP2) ist.

14. Spannungswandlersystem nach einem der Ansprüche 8 bis 13, **dadurch gekennzeichnet, dass** die Steuerung (50) für einen Einspeisezeitraum eine der Schaltphasen (SP1, SP2) ständig aufrecht erhält.

15. Spannungswandlersystem nach einem der Ansprüche 8 bis 14, **dadurch gekennzeichnet, dass** ein Wandlerausgang (236) vorgesehen ist, welcher in einer der Schaltphasen (SP1, SP2) mit der Verzweigung (16) verbindbar ist.

## Claims

1. A voltage converter comprising a converter input (12), an inductor (20) positioned between the converter input (12) and a branching point (16),
at least one storage branch (22, 32, 132) positioned betwen the branching point (16) and ground (14) in which a capacitance (24, 34, 134) is arranged,
a switch network (30, 130) for the synchorinzed charging or discharging of the capacitance,
and a controller (50) controlling the switch network (30, 130) **characterized in that** a basic storage branch (22) comprising a base capacitance (24) is arranged between the branching point (16) and ground (14), that a first auxiliary storage branch (32) comprising a first auxiliary capacitance (34) is arranged between the branching point (16) and ground (14), and that the controller (50) controls a first switch network (30) such that the base capacitance (24) and the first auxiliary capacitance (34) are connected in parallel between the branching point (16) and
ground (14) in a first switching phase (SP1) and the base capacitance (24) and the first auxiliary capacitance (34) are connected in series between the branching point (16) and ground (14) in a second switching phase (SP2).

2. The voltage converter according to claim 1, **characterized in that** the first switch network (30) comprises a first switch (26) between the branching point (16) and the base capacitance (24).

3. The voltage converter according to claim 1 or 2, **characterized in that** the first switch network (30) comprises a second switch (36) between the first auxiliary capacitance (34) and ground (14).

4. The voltage converter according to any one of the preceding claims, **characterized in that** the first switch network (30) comprises a third switch (40) arranged between a center tap (28) disposed between the first switch (26) and the base capacitance (24) and a center tap (38) disposed between the first auxiliary capacitance (34) and the second switch (36).

5. The voltage converter according to any one of the preceding claims, **characterized in that** the controller (50) closes the first switch (26) and the second switch (36) of the first switch network (30) and opens the third switch (40) of the first switch network (30) in the first switching phase (SP1) and that the controller (50) opens the first switch (26) and the second switch (36) of the first switch network (30) and closes the third switch (40) of the first switch network (30) in the second switching phase (SP2).

6. The voltage converter according to any one of the preceding claims, **characterized in that** a second auxiliary storage branch (134) comprising a second auxiliary capacitance (134) is arranged between the branching point (16) and ground and that a second switch network (13) is provided which switches the second auxiliary capacitance (134) parallel to the base capacitance (24) and to the first auxiliary capacitance (134) between the branching point (16) and ground (14) in the first switching phase (SP1) and, together with the first switch network (30), switches the base capacitance (24), the first auxiliary capacitance (34) and the second auxiliary capacitance (134) in series between the branching point (16) and ground (14).

7. The voltage converter according to claim 6, **characterized in that** the controller (50) closes the first switch (126) and the second switch (136) of the second switch network (130) and opens the third switch (140) of the second switch network (130) in the first switching phase (SP1) and opens the first switch (126) and the second switch (136) of the second switching network (130) and closes the third switch (140) of the second switch network (130) in the second switching phase (SP2).

8. A voltage converter system, **characterized in that** said voltage converter (200, 200', 200) comprises at least one voltage converter (10, 10') or for example two voltage converters (10, 10') in accordance with one of the preceding claims.

9. The voltage converter system according to claim 8, **characterized in that** the voltage converter (10) can be switched to a supplementary storage branch (194) in the second switching phase (SP2) and that the supplementary storage branch (194) is positioned for example between the branching point (16) and ground (14) in the second switching phase (SP2).

10. The voltage converter system according to claim 9, **characterized in that** the supplemen-tary storage branch (194) can only be switched in the second switching phase (SP2).

11. The voltage converter system according to any one of the preceding claims, **characterized in that** two voltage converters (10, 10') work however in parallel in the respective other switching phase (SP1, SP2).

12. The voltage converter system according to claim 11, **characterized in that** the voltage converter (10, 10') is supplied by a common inductor (20).

13. The voltage converter system according to claim 11 or 12, **characterized in that** the voltage converter comprises a converter output (220) which can be alternatively switched to a voltage converter (10) and that the converter output (220) can for example be switched to the voltage converter (10, 10') in the second switching phase (SP2).

14. The voltage converter system according to any one of claims 8 to 13, **characterized in that** the controller (50) continuously maintains one of the switching phases (SP1, SP2) during a period of supply.

15. The voltage converter system according to any one of claims 8 to 14, **characterized in that** a converter output (236) is provided which can be connected to the branching point (16) in one of the switching phases (SP1, SP2).

## Revendications

1. Convertisseur de tension comprenant une entrée de convertisseur (12), une réactance (20) qui est disposée entre l'entrée de convertisseur (12) et une ramification (16),
au moins une ramification de stockage (22, 32, 132) disposée entre la ramification (16) et la masse (14) et dans laquelle est agencée une capacité (24, 34, 134),
un réseau de commutateur (30, 130) pour charger ou décharger la capacité de manière cadencée,
et une commande (50) qui commande le réseau de commutateur (30, 130) **caractérisé en ce qu'**une ramification de stockage de base (22) est agencée entre la ramification (16) et la masse (14), laquelle comprend une capacité de base (24), **en ce qu'**une première ramification de stockage complémentaire (32) est agencée entre la ramification (16) et la masse (14), laquelle comprend une première capacité complémentaire (34), et **en ce que** la commande (50) commande un premier réseau de commutateur (30) de telle façon que, dans une première phase de commutation (SP1), la capacité de base (24) et la première capacité complémentaire (34) sont branchées en parallèle entre la ramification (16) et la masse (14) et, dans une seconde phase de commutation (SP2), la capacité de base (24) et la première capacité complémentaire (34) sont branchées en série entre la ramification (16) et la masse (14).

2. Convertisseur de tension selon la revendication 1, **caractérisé en ce que** le premier réseau de commutateur (30) comprend un premier commutateur (26) disposé entre la ramification (16) et la capacité de base (24).

3. Convertisseur de tension selon la revendication 1 ou 2, **caractérisé en ce que** le premier réseau de commutateur (30) comprend un second commutateur (36) disposé entre la première capacité complémentaire (34) et la masse (14).

4. Convertisseur de tension selon l'une des revendications précédentes, **caractérisé en ce que** le premier réseau de commutateur (30) comprend un troisième commutateur (40), lequel est agencé entre une sortie médiane (28) disposée entre le premier commutateur (26) et la capacité de base (24) et une sortie médiane (38) disposée entre la première capacité complémentaire (34) et le second commutateur (36).

5. Convertisseur de tension selon l'une des revendications précédentes, **caractérisé en ce que**, dans la première phase de commutation (SP1), la commande (50) ferme le premier commutateur (26) et le second commutateur (36) du premier réseau de commutateur (30) et ouvre le troisième commutateur (40) du premier réseau de commutateur (30), et **en ce que**, dans la seconde phase de commutation (SP2), la commande (50) ouvre le premier commutateur (26) et le second commutateur (36) du premier réseau de commutateur (30) et ferme le troisième commutateur (40) du premier réseau de commutateur (30).

6. Convertisseur de tension selon l'une des revendications précédentes, **caractérisé en ce qu'**une seconde ramification de stockage complémentaire (134) est agencée entre la ramification (16) et la masse, laquelle comprend une seconde capacité complémentaire (134), et **en ce qu'**il est prévu un second réseau de commutateur (130) qui, dans la première phase de commutation (SP1) commute la seconde capacité complémentaire (134) en parallèle à la capacité de base (24) et à la première capacité complémentaire (134) entre la ramification (16) et la masse (14) et qui, dans la seconde phase de commutation (SP2), commute conjointement avec le premier réseau de commutateur (30) la capacité de base (24), la première capacité complémentaire (34), et la seconde capacité complémentaire (134) en série entre la ramification (16) et la masse (14).

7. Convertisseur de tension selon la revendication 6, **caractérisé en ce que**, dans la première phase de commutation (SP1), la commande (50) ferme le premier commutateur (126) et le second commutateur (136) du premier réseau de commutateur (130) et ouvre le troisième commutateur (140) du second réseau de commutateur (130) et, dans la seconde phase de commutation (SP2), la commande (50) ouvre le premier commutateur (126) et le second commutateur (136) du second réseau de commutateur (130) et ferme le troisième commutateur (140) du second réseau de commutateur (130).

8. Système convertisseur de tension, **caractérisé en ce que** le système convertisseur de tension (200, 200', 200) comprend au moins un convertisseur de tension (10, 10') ou par exemple deux convertisseurs de tension (10, 10') selon l'une des revendications précédentes.

9. Système convertisseur de tension selon la revendication 8, **caractérisé en ce qu'**une ramification de stockage complémentaire (194) est susceptible d'être commutée avec le convertisseur de tension (10) dans la seconde phase de commutation (SP2), et **en ce que** dans la seconde phase de commutation (SP2), la ramification de stockage complémentaire (194) est disposée par exemple entre la ramification (16) et la masse (14).

10. Système convertisseur de tension selon la revendication 9, **caractérisé en ce que** la ramification de stockage complémentaire (194) ne peut être commutée que dans la seconde phase de commutation (SP2).

11. Système convertisseur de tension selon l'une des revendications précédentes, **caractérisé en ce que** deux convertisseurs de tension (10, 10') fonctionnent en parallèle mais dans l'autre phase de commutation respective (SP1, SP2).

12. Système convertisseur de tension selon la revendication 11, **caractérisé en ce que** les convertisseurs de tension (10, 10') sont alimentés par une réactance commune (20).

13. Système convertisseur de tension selon la revendication 11 ou 12, **caractérisé en ce que** le système convertisseur de tension comporte une sortie de convertisseur (220) qui peut être commutée alternativement avec l'un des convertisseurs de tension (10), et **en ce que** la sortie de convertisseur (220) peut être par exemple commutée avec le convertisseur de tension (10, 10') qui se trouve dans la seconde phase de commutation (SP2).

14. Système convertisseur de tension selon l'une des revendications 8 à 13, **caractérisé en ce que** la commande (50) maintient en permanence l'une des phases de commutation (SP1, SP2) pendant une période temporelle d'injection.

15. Système convertisseur de tension selon l'une des revendications 8 à 14, **caractérisé en ce qu'**il est prévu une sortie de convertisseur (236), qui peut être connectée avec la ramification (16) dans l'une des phases de commutation (SP1, SP2).
